# EUROPEAN PATENT SPECIFICATION

(11) **EP 3 401 278 B1**
(45) Date of publication and mention of the grant of the patent: **31.03.2021**
(21) Application number: 16883806.8
(22) Date of filing: 22.12.2016
(51) Int. Cl.: B82B 3/00, D02J 1/22

(54) **DRAWING DEVICE AND DRAWING METHOD**
VORRICHTUNG ZUM AUSZIEHEN UND VERFAHREN ZUM AUSZIEHEN
DISPOSITIF D'ÉTIRAGE ET PROCÉDÉ D'ÉTIRAGE

(30) Priority: 05.01.2016 JP 2016000677
(43) Date of publication of application: 14.11.2018
(73) Proprietor: Lintec Corporation, Tokyo 173-0001 (JP)
(72) Inventor: YAMAGUCHI, Kazuhisa, Tokyo 173-0001 (JP)
(74) Representative: Gille Hrabal Partnerschaftsgesellschaft mbB Patentanwälte
(86) International application number: PCT/JP2016/088279
(87) International publication number: WO 2017/119307

(56) References cited:
- WO-A1-2013/021797
- JP-A- 2010 248 069
- JP-A- 2011 153 392
- JP-A- 2015 203 003
- US-A1- 2008 018 012
- US-A1- 2008 248 235

## Description

### TECHNICAL FIELD

The present invention relates to a drawing apparatus and a drawing method.

### BACKGROUND ART

A typically known drawing apparatus is configured to hold and draw a part of a grown form, which is produced by growing carbon nanotubes, using a tool (holding member) such as tweezers and tape to form carbon nanotube film (extended form) (see, for instance, Patent Literature 1 or US 2008/018012 A1).

### CITATION LIST

### PATENT LITERATURE(S)

Patent Literature 1: JP 2009-184908 A

### SUMMARY OF THE INVENTION

### PROBLEM(S) TO BE SOLVED BY THE INVENTION

However, since the grown form is occasionally approximately several hundreds of micrometers thick, the typical drawing apparatus as disclosed in Patent Literature 1 cannot hold an end of the grown form with the holding member, thus failing to produce the extended form.

An object of the invention is to provide a drawing apparatus and a drawing method capable of reliably holding a part of a grown form to produce an extended form.

### MEANS FOR SOLVING THE PROBLEM(S)

A drawing apparatus according to an aspect of the invention is for drawing an extended form from a grown form produced by growing carbon nanotubes, the drawing apparatus including: a holder configured to hold a part of the grown form; and a drive unit configured to cause a relative movement of the grown form and the holder, in which the holder includes a holding member comprising a receiver unit configured to receive therein a part of the grown form held by the holder.

In the drawing apparatus according to the above aspect of the invention, it is preferable that the holder includes a biasing unit configured to bias the grown form received in the receiver unit toward a wall surface of the receiver unit.

A method of drawing an extended form from a grown form produced by growing carbon nanotubes according to another aspect of the invention includes: holding the grown form with a holder; and causing a relative movement of the grown form and the holder, in which the holding of the grown form includes receiving a part of the held grown form in a receiver unit provided to the holder.

According to the above aspects of the invention, since a part of the grown form is received and held by the receiver unit of the holding member, the part of the grown form can be reliably held in forming the extended form.

Further, when the grown form received in the receiver unit is biased toward the wall surfaces of the receiver unit, the adhesive force between the grown form and the receiver unit increases, thereby reliably holding the part of the grown form.

### BRIEF DESCRIPTION OF DRAWING(S)

Fig. 1A is a side elevational view showing a drawing apparatus according to an exemplary embodiment of the invention.
Fig. 1B is an illustration showing an operation of the drawing apparatus shown in Fig. 1A.
Fig. 2A is a partial side elevational view showing a drawing apparatus according to a modification of the invention.
Fig. 2B is a partial side elevational view showing a drawing apparatus according to another modification of the invention.
Fig. 2C is a partial side elevational view showing a drawing apparatus according to still another modification of the invention.

### DESCRIPTION OF EMBODIMENT(S)

An exemplary embodiment of the invention will be described below with reference to attached drawings.

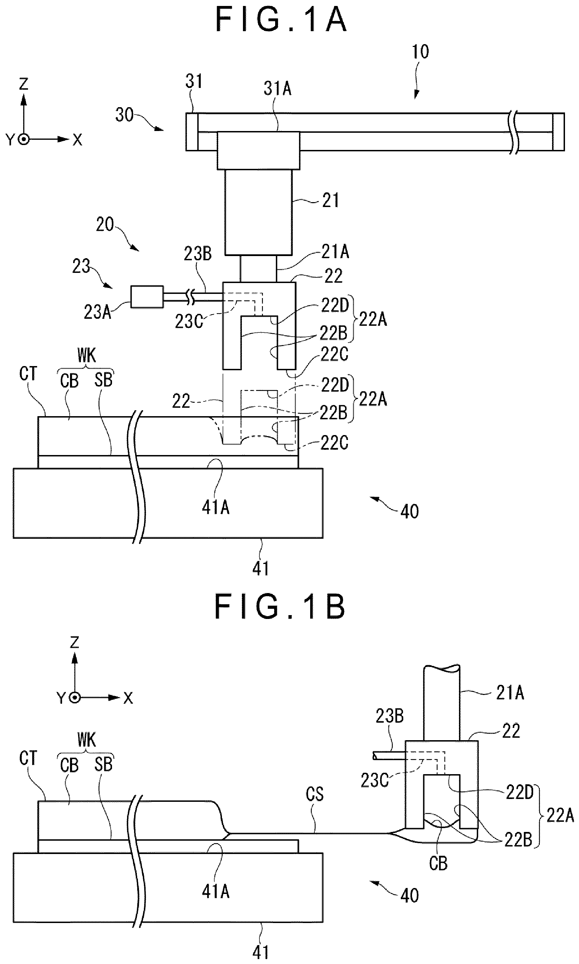

It should be noted that X-axis, Y-axis and Z-axis in the exemplary embodiment are orthogonal to each other, where the X-axis and Y-axis are within a predetermined plane while the Z-axis is orthogonal to the predetermined plane. Further, in the exemplary embodiment, when a direction is indicated with reference to Figs. 1A and 1B as viewed from near sides in these figures, which are parallel to the Y-axis, an "upper" direction means a direction indicated by an arrow along the Z-axis, a "lower" direction means a direction opposite the upper direction, a "right" direction means a direction indicated by an arrow along the X-axis, a "left" direction means a direction opposite the "right" direction, a "front" direction means a direction toward the near side in Figs. 1A and 1B in parallel to the Y-axis, and a "rear" direction means a direction opposite the "front" direction.

A drawing apparatus 10 shown in Fig. 1A is configured to draw a carbon nanotube sheet CS (extended form) (sometimes simply referred to as a "sheet CS" hereinafter) from a grown form CB produced by growing carbon nanotubes CT. The drawing apparatus 10 includes a holder 20 for holding a part of the grown form CB, and a drive unit 30 for relatively moving the grown form CB and the holder 20 and is provided near a grown-form support 40 for supporting the grown form CB. It should be noted that the grown form CB is produced by growing the carbon nanotubes CT in an upper direction from a first side of the substrate SB and is in a form of an integrated workpiece WK supported by the substrate SB.

The holder 20 includes: a holding member 22 supported by an output shaft 21A of a linear movement motor 21 (drive device) and provided with a groove 22A (receiver unit) configured to receive therein a distal end of a part of the held grown form CB in a drawing direction; and a biasing unit 23 configured to bias the grown form CB received in the groove 22A toward wall surfaces of the groove 22A (e.g. side walls 22B and a top wall 22D).

The groove 22A extends in a front-rear direction on a lower face 22C of the holding member 22.

The biasing unit 23 includes a gas feeder 23A (e.g. a pressurizing pump and turbine) connected to a through hole 23C penetrating through the holding member 22 into the groove 22A via a pipe 23B to feed gas (e.g. air and other gas).

The drive unit 30 includes a linear motor 31 (drive device) having a slider 31A for supporting the linear movement motor 21.

The grown-form support 40 includes a table 41 having a holding surface 41A for sucking and holding the integrated workpiece WK from a second side of the substrate SB using a decompressor (not shown) such as a decompression pump and vacuum ejector.

A process for drawing the sheet CS from the grown form CB using the above drawing apparatus 10 will be described below.

Initially, a signal for starting an automatic operation is inputted to the drawing apparatus 10 shown in Fig. 1A, whose components are set at initial positions, by an operator using an input device (not shown) such as an operation panel and personal computer. Subsequently, after the integrated workpiece WK is placed at a predetermined position on the holding surface 41A by the operator or a non-illustrated transport device (e.g. multi-joint robot), the grown-form support 40 drives the non-illustrated decompressor to suck and hold the integrated workpiece WK on the holding surface 41A.

Subsequently, the drive unit 30 drives the linear motor 31 to move the slider 31A so that a right end of the grown form CB is positioned immediately below the holding member 22. Then, the holder 20 drives the linear movement motor 21 to lower the holding member 22 as shown in chain double-dashed lines in Fig. 1A to press the grown form CB with the lower face 22C. Thus, the distal end of the grown form CB in the drawing direction enters the groove 22A and adheres to the groove 22A and the lower face 22C with the viscosity of the grown form CB.

Subsequently, the biasing unit 23 drives the gas feeder 23A to blow gas onto the grown form CB inside the groove 22A. The grown form CB having been received in the groove 22A is then stretched toward the side walls 22B, thereby increasing a contact area and, consequently, adhesion force to the side walls 22B. At this time, the grown form CB may adhere on the top wall 22D. Subsequently, when the drive unit 30 drives the linear motor 31 to move the holding member 22 rightward as shown in Fig. 1B, the grown form CB is drawn into a band-shaped sheet CS, in which the carbon nanotubes CT are agglomerated by intermolecular force to be aligned in the drawing direction.

When the distal end of the sheet CS in the drawing direction reaches a non-illustrated pickup unit such as a winding unit for winding the sheet CS and a cutter for cutting the sheet CS, the holder 20 drives the linear movement motor 21 to transfer the sheet CS to the pickup unit. Subsequently, when all or a predetermined amount of the grown form CB on the substrate SB is drawn into the sheet CS, the grown-form support 40 stops the non-illustrated decompressor to stop sucking and holding the integrated workpiece WK (substrate SB). Then, the non-illustrated transport device supports and collects the integrated workpiece WK (substrate SB). Then, after the drive device of each of the units is driven to return the corresponding component to the initial position, the same operations as described above are repeated.

According to the above exemplary embodiment, since a part of the grown form CB enters the groove 22A of the holding member 22 to be held, the part of the grown form CB can be reliably held in forming the sheet CS.

Though the best arrangement, process and the like for implementing the invention are disclosed as described above, the scope of the invention is not limited thereto. In other words, while the invention has been specifically explained and illustrated mainly in relation to a particular embodiment, a person skilled in the art could make various modifications in terms of shape, material, quantity or other particulars to the above described embodiment without deviating from the technical idea or any object of the invention. The description limiting the shapes and the materials disclosed above is intended to be illustrative for easier understanding and not to limit the invention. Hence, the invention includes the description using a name of component without a part of or all of the limitation on the shape and the material etc.

For instance, in some exemplary embodiments, the groove 22A extends in the right-left direction or an oblique direction slanted with respect to the right-left direction and the front-rear direction.

In some exemplary embodiments, the groove 22A consists of a single groove or a plurality of grooves. In the latter case, the plurality of grooves 22A are regularly or irregularly arranged in the front-rear direction, right-left direction or oblique direction slanted with respect to the front-rear direction and the right-left direction.

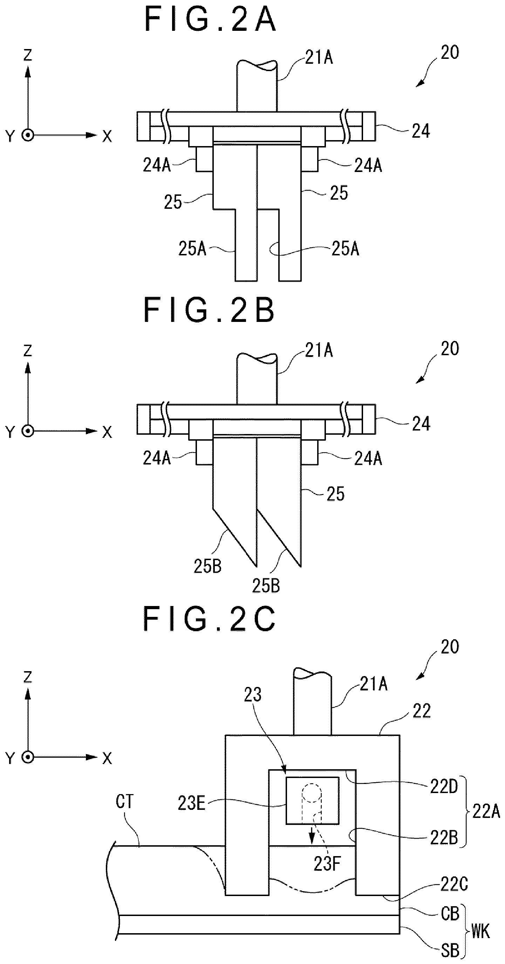

In some exemplary embodiments, the holder 20 includes a chuck cylinder 24 (drive device) supported by the output shaft 21A of the linear movement motor 21 and provided with chucks 24A, and a plurality of holding members 25 held between the chucks 24A, as shown in Figs. 2A and 2B. The holding members 25 include respective cut portions 25A or cut portions 25B that define the receiver unit. The chucks 24A of the holder 20 optionally support the holding members 25 so that the respective cut portions 25A or 25B face each other, support three or more holding members 25 side by side, or support the holding member 22 described in the exemplary embodiment. It should be noted that the cut portions 25A or 25B are optionally provided on each of right and left sides of each of the holding members 25.

In some exemplary embodiments, the holding member of the holder 20 is a doctor blade for printing, or optionally is made of metal, wood, glass, porcelain, rubber, resin, sponge or the like.

In some exemplary embodiments, the receiver unit is at least one circular or polygonal hole provided on the lower face 22C. When there are a plurality of holes, the plurality of holes are optionally regularly or irregularly arranged in the front-rear direction, right-left direction or oblique direction slanted with respect to the front-rear direction and the right-left direction.

As shown in Fig. 2C, in some exemplary embodiments, the biasing unit 23 includes a nozzle 23E connected to the gas feeder 23A and inserted in a space defined by the grown form CB and the groove 22A from at least one of front and rear openings of the groove 22A, and is configured to blow gas through a gas blow port 23F of the nozzle 23E.

Any device is usable as the biasing unit 23 as long as the biasing unit 23 biases the grown form CB received in the groove 22A toward the wall surfaces of the groove 22A. For instance, in some exemplary embodiments, the biasing unit 23 is a suction unit such as a decompression pump and a vacuum ejector.

In some exemplary embodiments, the biasing unit 23 is configured to blow gas onto the grown form CB to spread the grown form CB received in the groove 22A to adhere the grown form CB on the side walls 22B and/or the top wall 22D.

In some exemplary embodiments, the drive unit 30 is configured to move the table 41 with the holder 20 being fixed, or alternatively move both of the holder 20 and the table 41.

In some exemplary embodiments, the drive unit 30 moves the holder 20 in any direction such as obliquely front direction, obliquely rear direction, obliquely upper direction and obliquely lower direction.

In some exemplary embodiments, the grown-form support 40 supports the integrated workpiece WK and the grown form CB using a chuck unit such as a mechanical chuck and chuck cylinder, a mechanism using Coulomb's force, adhesive, pressure-sensitive adhesive, adhesive sheet, magnetic force or Bernoulli adsorption, and a drive device.

In some exemplary embodiments, the extended form is thread bundles of carbon nanotubes.

The invention is by no means limited to the above units and processes as long as the above operations, functions or processes of the units and processes are achievable, still less to the above merely exemplary arrangements and processes described in the exemplary embodiment. For instance, any drive unit within the technical scope at the time of filing the application is usable as long as the drive unit is capable of relatively moving the grown form and the holder (explanation for other units and processes will be omitted).

The drive device in the above exemplary embodiment is optionally be provided by: motorized equipment such as a rotary motor, linear movement motor, linear motor, single-spindle robot and multi-joint robot; an actuator such as an air cylinder, hydraulic cylinder, rodless cylinder and rotary cylinder; or a direct or indirect combination thereof (some of the drive devices overlap with the exemplified drive devices in the exemplary embodiment).

### EXPLANATION OF CODES

10 drawing apparatus
20 holder
22 holding member
22A groove (receiver unit)
22B side walls (wall surface)
22D top wall (wall surface)
23 biasing unit
30 drive unit
CB grown form
CT carbon nanotubes
CS carbon nanotube sheet (extended form)

## Claims

1. A drawing apparatus (10) for drawing an extended form (CS) from a grown form (CB) produced by growing carbon nanotubes (CT), the drawing apparatus comprising:
a holder (20) configured to hold a part of the grown form (CB); and
a drive unit (30) configured to cause a relative movement of the grown form (CB) and the holder(20),
**characterised in that** the holder (20) comprises a holding member (22) comprising a receiver unit (22A) configured to receive therein a part of the grown form (CB) held by the holder (20).

2. The drawing apparatus according to claim 1, wherein the holder (20) comprises a biasing unit (23) configured to bias the grown form (CB) received in the receiver unit (22A) toward a wall surface (22B, 22D) of the receiver unit (22A).

3. The drawing apparatus (10) according to claim 1, wherein the holder (20) presses the grown form (CB) with the holding member (22) to receive the part of the grown form (CB) into the receiver unit (22A).

4. A method of drawing an extended form (CS) from a grown forn (CB) produced by growing carbon nanotubes (CT), the method comprising:
holding the grown form (CB) with a holder (20); and
causing a relative movement of the grown form (CB) and the holder (20),
**characterised in that** the holding of the grown form (CB) comprises receiving a part of the held grown form in a receiver unit (22A) provided to the holder (20).

## Patentansprüche

1. Eine Ziehvorrichtung (10) zum Ziehen einer erweiterten Form (CS) aus einer gewachsenen Form (CB), die durch Wachsen von Kohlenstoffnanoröhren (CT) hergestellt wurde, wobei die Ziehvorrichtung umfasst:
einen Halter (20), der dazu eingerichtet ist, einen Teil der gewachsenen Form (CB) zu halten; und
eine Antriebseinheit (30), die dazu eingerichtet ist, eine Relativbewegung der gewachsenen Form (CB) und des Halters (20) zu bewirken,
**dadurch gekennzeichnet, dass** der Halter (20) ein Halteelement (22) umfasst, das eine Aufnahmeeinheit (22A) umfasst, die dazu eingerichtet ist, einen Teil der gewachsenen Form (CB), die von dem Halter (20) gehalten wird, darin aufzunehmen.

2. Die Ziehvorrichtung nach Anspruch 1, wobei der Halter (20) eine Vorspanneinheit (23) umfasst, die dazu eingerichtet ist, die in der Aufnahmeeinheit (22A) aufgenommene gewachsene Form (CB) in Richtung einer Wandfläche (22B, 22D) der Aufnahmeeinheit (22A) vorzuspannen.

3. Die Ziehvorrichtung (10) gemäß Anspruch 1, wobei der Halter (20) die gewachsene Form (CB) mit dem Halteelement (22) presst, um den Teil der gewachsenen Form (CB) in die Aufnahmeeinheit (22A) aufzunehmen.

4. Ein Verfahren zum Ziehen einer erweiterten Form (CS) aus einer gewachsenen Form (CB), die durch Wachsen von Kohlenstoffnanoröhren (CT) hergestellt wurde, das Verfahren umfassend:
Halten der gewachsenen Form (CB) mit einem Halter (20); und
Bewirken einer Relativbewegung der gewachsenen Form (CB) und des Halters (20),
**dadurch gekennzeichnet, dass** das Halten der gewachsenen Form (CB) das Empfangen eines Teils der gehaltenen gewachsenen Form in einer Aufnahmeeinheit (22A) umfasst, die an dem Halter (20) bereitgestellt ist.

## Revendications

1. Appareil d'étirage (10) destiné à étirer une forme étendue (CS) à partir d'une forme crûe (CB) produite en faisant croître des nanotubes de carbone (CT), l'appareil d'étirage comprenant :
un support (20) configuré pour retenir une partie de la forme crûe (CB) ; et
une unité d'entraînement (30) configurée pour provoquer un mouvement relatif de la forme crûe (CB) et du support (20),
**caractérisé en ce que** le support (20) comprend un élément de retenue (22) comprenant une unité de réception (22A) configurée pour recevoir une partie de la forme crûe (CB) retenue par le support (20) dans celle-ci.

2. Appareil d'étirage selon la revendication 1, dans lequel le support comprend une unité de sollicitation (23) configurée pour solliciter la forme crûe (CB) reçue dans l'unité de réception (22A) vers une surface de paroi (22B, 22D) de l'unité de réception (22A).

3. Appareil d'étirage selon la revendication 1, dans lequel le support (20) presse la forme crûe (CB) par moyen de l'élément de retenue (22) pour recevoir la partie de la forme crûe (CB) dans l'unité de réception (22A).

4. Procédé d'étirage d'une forme étendue (CS) à partir d'une forme crûe (CB) produite en faisant croître des nanotubes de carbone (CT), le procédé comprenant les étapes de :
retenir la forme crûe (CB) par un support (20) ; et
provoquer un mouvement relatif de la forme crûe (CB) et du support (20),
**caractérisé en ce que** la retenue de la forme crûe (CB) comprend l'étape de recevoir une partie de la forme crûe retenue dans une unité de réception (22A), dont le support (20) est muni.
